# EUROPEAN PATENT APPLICATION

(11) **EP 4 597 615 A1**
(43) Date of publication of application: **06.08.2025**
(21) Application number: 24854360.5
(22) Date of filing: 02.08.2024
(51) Int. Cl.: H01M 4/136, H01M 4/66, H01M 4/58, H01M 4/62, H01M 4/1397, H01M 10/0525, H01M 4/02

(54) **CATHODE FOR LITHIUM SECONDARY BATTERY, METHOD FOR MANUFACTURING SAME, AND LITHIUM SECONDARY BATTERY COMPRISING SAME**

(30) Priority: 11.08.2023 KR 20230105428
(71) Applicant: LG Energy Solution, Ltd., Seoul 07335 (KR)
(72) Inventor: AN, In Gu, Daejeon 34122 (KR); KIM, Hye Jin, Daejeon 34122 (KR)
(74) Representative: Hoffmann Eitle
(86) International application number: PCT/KR2024/011416
(87) International publication number: WO 2025/037808

(57) **Abstract**

Disclosed herein provides a positive electrode for lithium secondary battery including: a positive electrode current collector; a self-temperature control layer disposed on one or both sides of the positive electrode current collector, but disposed to cover a portion of the positive electrode current collector; and a positive electrode active material layer disposed on: an exposed positive electrode current collector region not covered by the self-temperature control layer; and the self-temperature control layer, wherein the self-temperature control layer includes a positive temperature coefficient (PTC) material.

## Description

### [Technical Field]

This application claims the benefit of priority from Korean Patent Application No. 10-2023-0105428, filed on Aug. 11, 2023, the disclosures of which are incorporated herein by reference.

The present disclosure relates to a positive electrode for a lithium secondary battery capable of controlling the temperature of the battery without separate control in response to temperature changes in the surrounding environment, a method for manufacturing the positive electrode, and a lithium secondary battery including the positive electrode.

### [Background]

As technology development and demand for electric vehicles and energy storage systems (ESS) increase, the demand for batteries as an energy source is growing rapidly, and various researches are being conducted on batteries that can meet various needs. In particular, lithium secondary batteries with high energy density and excellent life and cycle characteristics are being actively researched as a power source for these devices.

Lithium cobalt oxide (LCO), lithium nickel cobalt manganese oxide (LNCMO), and lithium iron phosphate (LFP) are used as positive electrode active materials in lithium secondary batteries.

Lithium iron phosphate is low-cost because it contains iron, a resource-abundant and low-cost material. In addition, the low toxicity of lithium iron phosphate means that its use reduces environmental pollution. Furthermore, because lithium iron phosphate has an Olivine structure, its active material structure can remain stable at high temperatures compared to lithium transition metal oxide, which has a layered structure. As a result, it has the advantage of excellent high temperature stability and high temperature life characteristics of the battery.

However, due to the high resistance of lithium iron phosphate, battery cells applied with lithium iron phosphate have characteristics of reduced capacity and power output at low temperatures compared to battery cells applied with other positive electrode active materials. Specifically, a battery cell applied with nickel-cobalt-manganese oxide (LNCMO) as the positive electrode active material has a charge capacity and a discharge capacity at minus 10 degrees Celsius that are around 73% of the charge capacity at room temperature and around 73% of the discharge capacity at room temperature, respectively, while a battery cell applied with lithium iron phosphate as the positive electrode active material has a charge capacity and a discharge capacity at minus 10 degrees Celsius that are around 51% of the charge capacity at room temperature and around 50% of the discharge capacity at room temperature, respectively.

Therefore, in order to improve the capacity and output characteristics of a battery cell applied with lithium iron phosphate as a positive electrode active material in a low-temperature environment, technical attempts have been made, such as installing a heater separately on the outside of the battery cell and driving the heater in a low-temperature environment. However, these prior art technologies require the addition of a separate heating film and controller.

Therefore, there is a need to develop technologies to improve the poor low-temperature characteristics of a battery cell applied with lithium iron phosphate.

### [Summary]

### [Technical Problem]

The problem that the technical idea of the present disclosure aims to solve is to improve the capacity and power output characteristics of a battery applied with lithium iron phosphate, which degrade at low temperatures.

### [Technical Solution]

According to one embodiment of the present disclosure to address the above challenges, a positive electrode is provided. The positive electrode includes a positive electrode current collector; a self-temperature control layer disposed on one or both sides of the positive electrode current collector, but disposed to cover a portion of the positive electrode current collector; and a positive electrode active material layer disposed on: an exposed positive electrode current collector region not covered by the self-temperature control layer; and the self-temperature control layer, wherein the self-temperature control layer includes a positive temperature coefficient (PTC) material.

In one embodiment, the positive electrode active material layer includes lithium iron phosphate as a positive electrode active material.

In one embodiment, the PTC material has a structure in which conductive material is dispersed in a polymeric material.

In one embodiment, the conductive material is a conductive carbon-based material.

In one embodiment, the self-temperature control layer includes 1 to 60 wt% of polymeric material; and 1 to 60 wt% of conductive material.

In one embodiment, the self-temperature control layer has a pattern shape selected from a striped pattern with a plurality of strips spaced apart side by side, a grid-like pattern with a plurality of strips extending in a y-axis direction and a plurality of strips extending in an x-axis direction intersecting, and a radial pattern with one strip spreading out in a whirlwind pattern.

In one embodiment, the self-temperature control layer has the grid-like pattern.

In one embodiment, a width of the strip is selected from the range of 0.5 to 10 mm.

In one embodiment, a thickness of the self-temperature control layer is selected from a range of 3 to 30% of a thickness of the positive electrode active material layer.

In one embodiment, a thickness of the positive electrode active material layer is selected in the range of 50 to 200 µm.

In one embodiment, an area A of the positive electrode current collector covered by the self-temperature control layer is less than or equal to 50% of a total area B of the positive electrode current collector.

In one embodiment, at least a portion of the sides of the self-temperature control layer may in contact with the positive electrode active material layer.

According to another embodiment of the present disclosure, the present disclosure provides a manufacturing method of a positive electrode for lithium secondary battery including: applying a PTC material composition on a positive electrode current collector; applying a positive electrode slurry onto the positive electrode current collector to which the PTC material composition is applied; and drying and rolling, wherein the process of applying the PTC material composition is characterized in that the PTC material composition is applied to cover a portion of the positive electrode current collector.

According to yet another embodiment of the present disclosure, the present disclosure provides a lithium secondary battery including: the positive electrode; a negative electrode; a separator; and an electrolyte.

### [Advantageous Effects]

According to exemplary embodiments of the present disclosure, a self-temperature control layer including a positive temperature coefficient (PTC) material can increase the heat generation of a battery when the battery is operated in a low-temperature environment, thereby improving the capacity and power output characteristics of a battery that degrades at low temperatures.

### [Brief Description of the Drawings]

FIG. 1 is a cross-sectional view of a positive electrode for a lithium secondary battery, according to exemplary embodiments.
FIG. 2 is a diagram illustrating the arrangement of a self-temperature control layer according to exemplary embodiments.
FIGS. 3 through 4 are diagrams illustrating the arrangement of a self-temperature control layer according to exemplary embodiments.
FIG. 5 is a flowchart to illustrate a method for manufacturing a positive electrode for a lithium secondary battery according to exemplary embodiments.
FIG. 6 is a graph illustrating the properties of PTC materials according to exemplary embodiments.

### [Description of Reference Numerals]

100: POSITIVE ELECTRODE
110: POSITIVE ELECTRODE CURRENT COLLECTOR
120: SELF-TEMPERATURE CONTROL LAYER
130: POSITIVE ELECTRODE ACTIVE MATERIAL LAYER

### [Best Mode for Carrying out the Invention]

Hereinafter, the present disclosure will be described in more detail to aid understanding of the disclosure.

The terms and words used in this specification and the claims should not be interpreted as being limited to their usual or dictionary meanings, but should be interpreted based on the principle that the inventor can appropriately define the concepts of the terms to best explain his invention. Therefore, they should be understood in a sense and meaning consistent with the technical ideas of the present disclosure.

The terms used in this specification is for the purpose of describing exemplary embodiments only and is not intended to limit the invention. Singular expressions include plural expressions unless the context clearly indicates otherwise.

Because the embodiments of the present disclosure are provided to more fully illustrate the disclosure to those of ordinary skill in the art, the shapes and sizes of the components in the drawings may be exaggerated, omitted, or shown schematically for clarity. Accordingly, the size or proportion of each component is not necessarily indicative of its actual size or proportion.

In this specification, terms such as "include," "comprise," or "have" specify the presence of stated features, numbers, steps, components, or combinations thereof, but do not preclude the presence or addition of one or more other features, numbers, steps, components, or combinations thereof.

As used herein, the term "combination(s) thereof" of a Markush-format representation means one or more mixtures or combinations selected from the group consisting of the components described in the Markush-format representation, and includes one or more selected from the group consisting of the components.

In this specification, references to "A and/or B" shall mean "A or B or both".

In this specification, "%" means wt% unless otherwise expressly indicated.

As used herein, the full-length direction of the positive electrode is defined as the X-axis direction, the full-width direction of the positive electrode is defined as the Y-axis direction, and the direction perpendicular to the plane by the combination of the X-axis direction and the Y-axis direction is defined as the Z-axis direction.

### Positive electrode for Lithium Secondary Battery

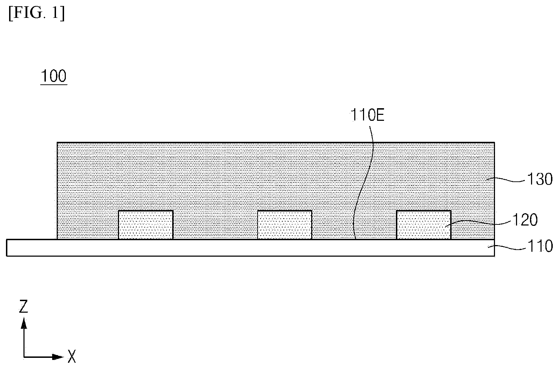

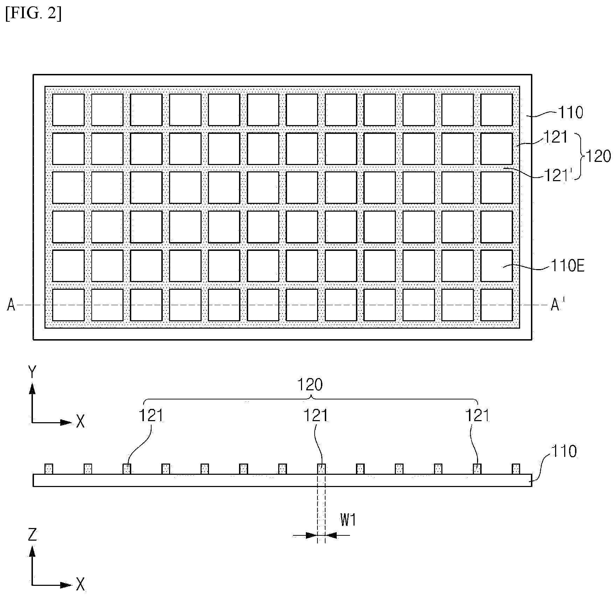

FIG. 1 is a cross-sectional view of a positive electrode for lithium secondary battery according to exemplary embodiments, and FIG. 2 is a diagram illustrating an arrangement of a self-temperature control layer according to exemplary embodiments. The upper drawing of FIG. 2 shows a top view of the positive electrode, and the lower drawing of FIG. 2 shows a cross-sectional view of the positive electrode cut along the dashed line in the upper drawing of FIG. 2.

Referring to these drawings, a positive electrode (100, hereinafter referred to as "positive electrode") for a lithium secondary battery according to one embodiment of the present disclosure includes a positive electrode current collector (110), a self-temperature control layer (120), and a positive electrode active material layer (130), wherein the self-temperature control layer (120) may be disposed to cover a portion of the positive electrode current collector (110), and the positive electrode active material layer (130) may be disposed on an exposed positive electrode current collector region (110E) not covered by the self-temperature control layer and on the self-temperature control layer (120).

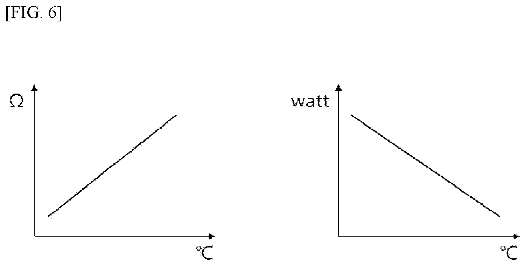

The self-temperature control layer 120 includes a positive temperature coefficient (PTC) material. FIG. 6 is a graph illustrating the properties of the PTC material according to exemplary embodiments. Referring to FIG. 6, the PTC material has a constant temperature coefficient, which characterizes it as having low resistance in low temperature environments and increasing resistance with increasing temperature. Since PTC materials exhibit relatively low resistance at low temperatures, higher currents can flow through them, generating heat.

When the temperature is increased due to self-heating of the PTC material, the resistance of the PTC material increases, and the increase in resistance reduces the current flow, which reduces heat generation. Therefore, when the self-temperature control layer 120 including the PTC material passes current in a low-temperature environment, the self-temperature control layer 120 may self-heat as the heat generation amount of the PTC material increases, causing the temperature of the positive electrode to increase. Furthermore, when the temperature of the PTC material increases and reaches a certain temperature, the resistance of the PTC material increases dramatically, which reduces the current flowing through the self-temperature control layer, thereby preventing overheating of the battery. As described above, the self-temperature control layer 120 has a self-heating effect when the battery is operated in a low-temperature environment, so that a separate battery heating means is not required to increase the temperature of the battery in a low-temperature environment.

Meanwhile, since the self-temperature control layer 120 may act as a resistor in a room temperature or high-temperature environment, it is preferred that the self-temperature control layer 120 is disposed to cover a portion of the positive electrode current collector, rather than being disposed to cover all of the surfaces of the positive electrode current collector.

The positive electrode 100 according to the above exemplary embodiments may increase the heat generation by the PTC function of the self-temperature control layer when the battery is operated in a low-temperature environment, thereby increasing the temperature of the battery without a separate heating means. In particular, the capacity and output of the battery with lithium iron phosphate as the positive electrode active material are degraded in a low-temperature environment, but according to the exemplary embodiments, even if lithium iron phosphate is applied as the positive electrode active material, the temperature of the battery can be increased without a separate heating means in a low-temperature environment, so that the capacity expression and output performance can be improved.

The positive electrode current collector may be, but is not limited to, any material that has conductivity and does not cause chemical changes in the battery. For example, stainless steel, aluminum, nickel, titanium, calcined carbon, or aluminum or stainless steel that is surface-treated with carbon, nickel, titanium, silver, or the like may be used as the current collector.

The positive electrode current collector may have a thickness of 3 µm to 500 µm, and may also have microscopic irregularities on the surface of the positive electrode current collector to increase adhesion to the positive electrode active material layer. For example, it can be used in various forms, such as films, sheets, foils, nets, porous bodies, foams, nonwoven bodies, etc.

The surface roughness Ra of the positive electrode current collector is not particularly limited. **In** exemplary embodiments, the positive electrode current collector may have a surface roughness Ra of less than 1 µm, more specifically in the range of 50 to 900 nm, or 70 to 700 nm, or 85 to 500 nm, or 90 to 300 nm. When the surface roughness Ra of the positive electrode current collector is in the above range, the interfacial adhesion between the positive electrode current collector and the positive electrode active material layer may be better.

Here, surface roughness refers to the degree of microscopic irregularities on the surface of the positive electrode current collector, which can be expressed in terms of arithmetic average roughness. The surface roughness Ra is measured as follows. Using a laser microscope (VK-X100k, Keyence), laser scanning was performed in auto measure mode after focusing on the surface of the positive electrode current collector at a magnification of X150. The measurement standard was set according to JIS B0601:2001, and the measurement area was selected as all areas to measure Ra over the entire area. The Ra value for each sample was determined by measuring the Ra of 10 places on the surface of the positive electrode current collector while moving the measurement position of the sample, and expressed as the average value.

Since the self-temperature control layer in the present disclosure functions to raise the temperature of the positive electrode by self-heating at a low temperature, the higher the area ratio of the area where the self-temperature control layer is in contact with the positive electrode active material layer, the greater the temperature raising effect can be. In this respect, even if the surface of the positive electrode current collector has a microscopic irregular shape as described above, the thickness of the self-temperature control layer may have a range such that it can cover both the concave and convex parts of the microscopic irregularities. For example, as shown in FIG. 1, the self-temperature control layer 120 may have at least a portion of its sides abutting the positive electrode active material layer 130. By side, in the self-temperature control layer 120, it refers to the two remaining surfaces excluding the upper surface parallel to the X direction and abutting the positive electrode active material layer 130 and the lower surface parallel to the X direction and abutting the positive electrode current collector 110, which may be the thickness direction (Z direction) side. In order to increase the self-heating effect by the self-temperature control layer, it is desirable to have a larger area of the self-temperature control layer 120 abutting the positive electrode active material layer.

The self-temperature control layer 120 may be disposed on one or both sides of the positive electrode current collector 110. In the case of a double-sided positive electrode in which the positive electrode active material layer is formed on both sides of the current collector, the self-temperature control layer may be disposed on both sides of the positive electrode current collector, and in the case of a single-sided positive electrode in which the positive electrode active material layer is formed on one side of the current collector, the self-temperature control layer may be disposed on one side of the positive electrode current collector.

The self-temperature control layer may include a PTC material, or may be composed of a PTC material. The PTC material has the property of decreasing resistance as the temperature of the battery decreases and increasing resistance as the temperature of the battery increases. The PTC material may be a structure in which conductive material is dispersed in a polymeric material having a low electrical conductivity, and electrical pathways are formed along the conductive particles. The resistance of the PTC material may increase as the temperature increases, due to the volume expansion of the polymeric material and, in some cases, the flow of the conductive particles, which increases the distance between the conductive particles. Conversely, when the temperature decreases, the distance between the conductive particles may decrease due to a decrease in the volume of the polymeric material, which may decrease the resistance of the PTC material.

Since the self-temperature control layer may act as a resistor for the positive electrode in both room temperature and high temperature environments as it includes PTC material, the self-temperature control layer is preferably patterned to expose a portion of the positive electrode current collector as shown in FIGS. 1 and 2.

Referring to FIGS. 1 and 2, the self-temperature control layer 120 may be disposed in a grid-like pattern, with a plurality of strips 121 extending in the y-axis direction and a plurality of strips 121' extending in the x-axis direction intersecting. When the self-temperature control layer is disposed in a grid-like pattern, it is preferable in that the increase in resistance of the electrode at room temperature is not large.

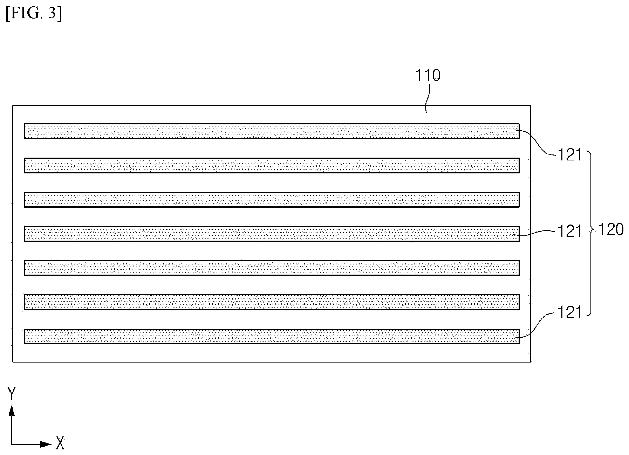

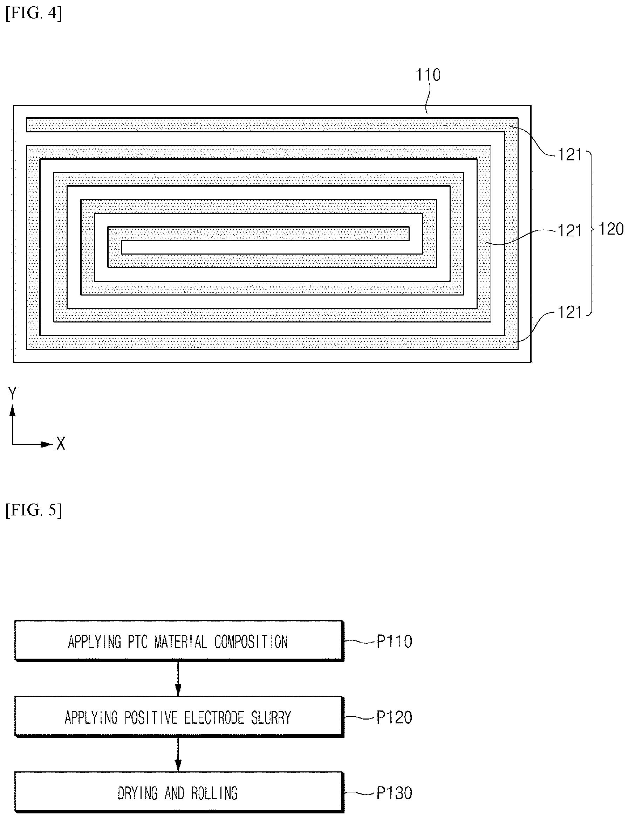

FIGS. 3 and 4 illustrate various arrangements of the self-temperature control layer according to exemplary embodiments. Referring to FIG. 3, the self-temperature control layer 120 may be disposed in a striped pattern with a plurality of strips 121 spaced apart from each other. Referring to FIG. 4, the self-temperature control layer 120 may be radially disposed with one strip 121 spreading out in a whirlwind pattern.

The plurality of strips may be spaced apart from each other at a certain spacing. The mutual spacing between the strips is not particularly limited, but may be in the range of 5 to 40 mm, more particularly in the range of 7 to 35 mm, more particularly in the range of 10 to 30 mm, more particularly in the range of 12 to 25 mm.

In one particular example, a width W1 of the strip 121 may range from 0.5 to 10 mm, more specifically from 1 to 5 mm, and even more specifically from 1.5 to 4 mm. When the width of the strip is in the numerical range, it is preferable in terms of capacity expression and output performance of the battery in a low temperature environment.

In one specific example, a thickness of the self-temperature control layer may be from 3 to 30%, more specifically from 4 to 25%, more specifically from 5 to 20%, of a thickness of the positive electrode active material layer. Furthermore, in some embodiments, the thickness of the self-temperature control layer may be in the range of 1 to 50µm, or 2 to 40 µm, or 3 to 30 µm, or 5 to 20 µm. When the thickness of the self-temperature control layer is in the above range, it is preferable that the battery can have suitable resistance characteristics in room temperature and high temperature environments.

The area A of the positive electrode current collector 110 covered by the self-temperature control layer 120 may be 50% or less of the total area B of the positive electrode current collector, preferably 5 to 40%, more preferably 10 to 30%. When the proportion of the area A of the positive electrode current collector 110 covered by the self-temperature control layer 120 satisfies the above range, it is desirable to be able to improve the capacity expression and output performance of the battery in a low-temperature environment, while still having adequate resistance characteristics in a room temperature and high-temperature environment.

In one specific example, the self-temperature control layer includes a PTC material to exhibit PTC properties, wherein the PTC material may be a conductive material dispersed in a polymeric material.

The polymeric material may be, but is not particularly limited to, for example, a thermoplastic polymer, provided that it has a low electrical conductivity and changes in volume with a change in temperature, causing a change in the conductive network by the conductive material.

The thermoplastic polymer may be a semi-crystalline material, as it may be easier to obtain PTC properties in a semi-crystalline material compared to an amorphous thermoplastic material. The semi-crystalline thermoplastic material may have a crystallinity of 5% or more, more particularly 10% or more, and more particularly 15% or more.

The thermoplastic polymer may be, for example, but is not particularly limited to, one or more selected from the group consisting of high density polyethylene, linear low density polyethylene, low density polyethylene, medium density polyethylene, maleic anhydride functionalized polyethylene, maleic anhydride functionalized elastomers, ethylene copolymers (e.g., ExxonMobil's EXXELOR VA1801 and VA1803), ethylene butene copolymers, ethylene octene copolymers, ethylene acrylate copolymers such as ethylene methyl acrylate, ethylene ethyl acrylate and ethylene butyl acrylate copolymers, polyethylene (PE) including glycidyl methacrylate modified polyethylene, polypropylene (PP), maleic anhydride functionalized polypropylene, glycidyl methacrylate modified polypropylene, polyvinyl chloride (PVC), polyvinyl acetate, polyvinyl acetyl, acrylic resin, syndiotactic polystyrene (sPS), polyamides including, but not limited to, PA6, PA66, PA11, PA12, PA6T, PA9T, poly-tetra-fluoroethylene (poly-tetra-fluoroethylene: PTFE), polybutylene terephthalate (PBT), polyphenylene sulfide (PPS), polyamideimide, polyimide, polyethylene vinyl acetate (EVA), glycidyl methacrylate modified polyethylene vinyl acetate, polyvinyl alcohol, polymethyl methacrylate (PMMA), and polyisobutylene, polyvinylidene chloride, polyvinylidene fluoride (PVDF), polymethyl acrylate, polyacrylonitrile, polybutadiene, polyethylene-terephthalate (PET), poly8-aminocaprylic acid, polyvinyl alcohol, polyvinyl alcohol (PVA), and polycaprolactone.

The substrate is by way of example only, and it is of course possible to manufacture PTC materials using thermosetting polymers in addition to the thermoplastic polymers.

A content of the polymeric material may be from 1 to 60 wt%, more specifically from 5 to 50 wt%, based on the total weight of the self-temperature control layer.

If the content of the polymeric material is less than 1 wt%, the volume expansion of the PTC material is not large when the temperature rises, and it is difficult to effectively block the current. On the other hand, if the content of the polymeric material is more than 60 wt%, the polymeric material does not exist as it is dispersed in the form of particles, but agglomerates with each other and exists in the form of large lumps, which causes the PTC properties to deteriorate.

The effective operating temperature of the PTC material can be suitably selected within a range that does not impair the capacity expression and output characteristics of the battery without impairing the general use of the battery, for example, it may be in the range of -20 °C to +100 °C.

In one specific example, the PTC material may include the polymeric material and conductive material, and may optionally further include a binder.

The conductive materials are not particularly limited, as long as they are conductive without causing chemical changes, for example, graphite, such as natural or artificial graphite; carbon black, such as carbon black, acetylene black, ketjen black, channel black, furnace black, lamp black, thermal black, etc; conductive fibers such as carbon fibers or metal fibers; carbon fluoride; metal powders such as aluminum, nickel powder, and the like; conductive whiskeys such as zinc oxide, potassium titanate, and the like; conductive metal oxides such as titanium oxide; conductive materials such as polyphenylene derivatives, and the like may be used, preferably conductive carbon-based materials. The conductive carbon-based materials such as carbon black and conductive fibers may be preferred as conductive materials included in the self-temperature control layer because they have excellent conductivity and are advantageous for forming a conductive network with the conductive material of the positive electrode active material layer.

In one specific example, the content of the conductive material may be from 1 to 60 wt%, more specifically from 5 to 50 wt%, based on the total weight of the self-temperature control layer.

When the content of the conductive material is less than 1 wt%, the content of the polymeric material and the binder is relatively increased, increasing the resistance of the electrode, and when the content of the conductive material is greater than 60 wt%, the content of the polymeric material and the binder is relatively decreased, decreasing the adhesion of the self-temperature control layer.

The binder is not particularly limited as long as it is capable of providing sufficient adhesion without causing chemical changes, for example, it may be one or more selected from the group consisting of polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, fluorinated rubber, and various copolymers.

In one specific example, the content of the binder may be 20 wt% or less, more specifically 1 to 20 wt%, more specifically 2 to 15 wt%, based on the total weight of the self-temperature control layer. The inclusion of the binder may improve the adhesion between the self-temperature control layer and the current collector and/or the adhesion between the self-temperature control layer and the positive electrode active material layer. However, if the content of the binder is greater than 20 wt%, the resistance of the positive electrode may increase, which may lead to an increase in the internal resistance of the battery, thereby reducing the overall performance of the battery.

The positive electrode active material layer 130 may be disposed across the exposed positive electrode current collector portion 110E, which is not covered by the self-temperature control layer; and the self-temperature control layer 120. That is, a portion of the positive electrode active material layer may be in surface contact with the positive electrode current collector and the remaining portion may be in surface contact with the self-temperature control layer.

The positive electrode active material layer may include a positive electrode active material, a positive electrode binder, and may optionally include a positive electrode conductive material, a filler, or a positive electrode dispersant, as desired.

The positive electrode active material may include lithium iron phosphate. It is possible to use lithium iron phosphate alone as the positive electrode active material, but it is also possible to mix use a small amount of lithium nickel cobalt manganese oxide, e.g. 0.01 to 3 wt%.

The lithium iron phosphate may include a form in which the lithium iron phosphate is doped with metal and a structure in which the lithium iron phosphate is carbon coated. Specifically, the lithium iron phosphate may be of the composition of Chemical Formula 1 below.

[Chemical Formula 1] Li₁₊ₐFe₁₋ₓMₓ(PO_{4-b})X_{b}

In Chemical Formula 1,
M comprises any one or more elements selected from the group consisting of Al, Mg, Ni, Co, Mn, Ti, Ga, Cu, V, Nb, Zr, Ce, In, Zn, and Y,
X comprises any one or more elements selected from the group consisting of F, S, and N, and
a, b, and x are in the range -0.5≤a≤0.5, 0<b≤0.1, and 0≤x≤0.8, respectively.

For example, the lithium iron phosphate may be LiFePO₄. As another example, the lithium iron phosphate may have a structure in which LiFePO₄ is doped with Mn and/or a structure formed with carbon coating layer. By applying the lithium iron phosphate as a positive electrode active material, the battery safety can be improved and the manufacturing cost can be significantly reduced.

The lithium iron phosphate may include a carbon coating layer formed on its surface. When a carbon coating layer is formed on the surface of the lithium iron phosphate, the electrical conductivity can be improved, thereby improving the resistance characteristics of the positive electrode. The carbon coating layer may be formed from at least one selected from the group consisting of glucose, sucrose, lactose, starch, oligosaccharides, polysaccharides, fructose, cellulose, polymers of furfuryl alcohol, block copolymers of ethylene and ethylene oxide, vinyl-based resins, cellulose-based resins, phenolic resins, pitchbased resins, and tar-based resins. Specifically, the carbon coating layer may be formed by mixing the raw materials with lithium iron phosphate and then heat treating.

The positive electrode binder serves to aid in the coupling of the positive electrode active material to the conductive material, and the coupling of the conductive material to the current collector. Specific examples include polyvinylidene difluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene-butadiene rubber, fluorinated rubber, or various copolymers thereof, any one of which may be used alone or a mixture of two or more of the foregoing.

The positive electrode conductive material is not particularly limited as long as it is conductive without causing chemical changes in the battery. For example, the positive electrode conductive material may be graphite; carbon black, such as carbon black, acetylene black, ketjen black, channel black, furnace black, lamp black, thermal black, etc.; conductive fibers, such as carbon fiber or metal fiber; carbon fluoride; metal powders, such as aluminum, nickel powder; conductive whiskeys, such as zinc oxide, potassium titanate; conductive metal oxides, such as titanium oxide; or polyphenylene derivatives. Examples of commercially available conductive materials include the Acetylene Black series (products from Chevron Chemical Company, Denka Singapore Private Limited, Gulf Oil Company, and others), Ketjenblack, EC series (Armak Company), Vulcan XC-72 (Cabot Company), and Super P (Timcal).

The positive electrode dispersant inhibits agglomeration of the positive electrode active material and enables effective dispersion of the positive electrode active material, such as the lithium iron phosphate, in the positive electrode active material layer. The dispersant may include a hydrogenated nitrile-based copolymer, and more particularly, the dispersant may be a hydrogenated nitrile-based copolymer.

Specifically, the hydrogenated nitrile-based copolymer may be a copolymer including α,β-unsaturated nitrile-derived structural units and hydrogenated conjugated diene-derived structural units, or a copolymer including α,β-unsaturated nitrile-derived structural units, conjugated diene-derived structural units, and hydrogenated conjugated diene-derived structural units. As the α,β-unsaturated nitrile monomers, for example, acrylonitrile or methacrylonitrile may be used, one of which may be used alone or a mixture of two or more of which may be used. As the conjugated diene-based monomer, for example, a conjugated diene-based monomer having a carbon number of 4 to 6, such as 1,3-butadiene, isoprene, or 2,3-methylbutadiene may be used, which may be used alone or a mixture of two or more of which may be used.

More specifically, the hydrogenated nitrile-based copolymer may be a hydrogenated nitrile butadiene rubber (H-NBR).

The positive electrode dispersant may be included in an amount of 0.1 wt% to 2.0 wt%, more particularly from 0.2 wt% to 1.8 wt%, more particularly from 0.3 wt% to 1.6 wt%, based on the total positive electrode active material layer. When the content of the positive electrode dispersant satisfies the above range, it can inhibit agglomeration of the positive electrode active material while preventing gelation of the positive electrode slurry.

In one specific example, the positive electrode active material layer may have an average loading amount in the range of 300 mg/25 cm² to 600 mg/25 cm². And the thickness of the positive electrode active material layer may be selected in the range of 50 to 200 µm, more particularly in the range of 60 to 180 µm, and more particularly in the range of 70 to 160 µm.

### Manufacturing method of a positive electrode for lithium secondary battery

FIG. 5 is a flowchart to illustrate a method for manufacturing a positive electrode for a lithium secondary battery, according to exemplary embodiments.

Referring to FIG. 5, a method of manufacturing a positive electrode according to exemplary embodiments may include: applying a PTC material composition to a positive electrode current collector (P110); applying a positive electrode slurry to the positive electrode current collector to which the PTC material composition is applied (P120); and drying and rolling (P130). According to exemplary embodiments, the process of applying the PTC material composition (P110) may include applying the PTC material composition so as to cover a portion of the positive electrode current collector. The PTC material composition undergoes a drying and rolling process to become the self-temperature control layer described above.

The PTC material composition may be a composition of the aforementioned PTC material mixed/stirred in a solvent. The PTC substance has been described in detail previously, so redundant descriptions are omitted.

The solvent is for mixing the polymeric material, the conductive material and the binder described above. The solvent may be any solvent commonly used in the art, for example, dimethyl sulfoxide (DMSO), isopropyl alcohol, N-methyl-2-pyrrolidone (NMP), acetone, acetonitrile, or water, and may be used alone or in a mixture of two or more of the foregoing. The solids concentration of the PTC material composition may range from 50 wt% to 90 wt%, preferably from 60 wt% to 80 wt%.

According to one embodiment, in the process of applying the the PTC composition P110, the the PTC composition is applied so that some areas of the current collector are exposed, but it is preferably applied in a patterned shape to prevent uneven resistance of the electrode.

The shape of the pattern may be one selected from the group consisting of striped, grid-like, and radial, as described above.

The thickness of the PTC material composition, the proportion of the area covered by the PTC composition on all surfaces of the current collector, the width of the strip, etc. have been described in detail previously and will not be repeated.

After applying the PTC material composition, the process P120 of applying the positive electrode slurry can be performed without drying the PTC material composition, or the process P120 of applying the positive electrode slurry can be performed after drying the PTC material composition.

The positive electrode slurry may be a slurry of the positive electrode active material, positive electrode binder, positive electrode conductive material, and dispersant described above mixed/stirred in a solvent. Since the positive electrode active material, positive electrode binder, positive electrode conductive material, and dispersant have been described in detail previously, redundant descriptions will be omitted.

The solvent may be any solvent commonly used in the art and may be, for example, one or a mixture of two or more selected from the group consisting of dimethyl sulfoxide (DMSO), isopropyl alcohol, N-methyl-2-pyrrolidone (NMP), acetone, and water.

The solvent may be included in an amount to provide the positive electrode slurry with a suitable viscosity and solids content. For example, the solvent may be included in an amount such that the solids content in the slurry is from 50 wt% to 75 wt%, more particularly from 50 wt% to 70 wt%, more particularly from 55 wt% to 70 wt%.

The drying and rolling P130 may include passing the slurry for the positive electrode through a drying device to remove solvents, and pressing the electrodes to a suitable density.

The method of the drying and rolling process is not particularly limited and may be performed by any method known in the art of positive electrodes for secondary batteries.

Even when lithium iron phosphate is used as the positive electrode active material, the positive electrode manufactured in this way does not require a separate means of heating the battery, as the self-temperature control layer with PTC characteristics enables the capacity and output performance of the battery to be maintained at a certain level in a low-temperature environment.

### Lithium secondary battery

Next, a lithium secondary battery according to the present disclosure will be described.

A lithium secondary battery according to one embodiment of the present disclosure may include a positive electrode, a negative electrode, a separator interposed between the positive electrode and negative electrode, and an electrolyte.

In the lithium secondary battery, the positive electrode is as previously described. For example, the positive electrode 100 includes a positive electrode current collector 110, a self-temperature control layer 120, and a positive electrode active material layer 130, wherein the self-temperature control layer 120 may be disposed to cover a portion of the positive electrode current collector 110, and the positive electrode active material layer 130 may be disposed on the exposed positive electrode current collector portion 110E that is not covered by the self-temperature control layer and on the self-temperature control layer 120 .

The negative electrode may be prepared, for example, by preparing a negative electrode-forming composition including a negative electrode active material, a negative electrode binder, and a negative electrode conductive material, and then applying the composition to the negative electrode current collector.

The negative electrode active material is not particularly limited, and in general, any compound capable of reversible intercalation and deintercalation of lithium may be used. Specific examples include carbonaceous materials such as artificial graphite, natural graphite, graphitized carbon fiber, amorphous carbon, and highly crystalline carbon; metallic compounds that can be alloyed with lithium, such as Si, Al, Sn, Pb, Zn, Bi, In, Mg, Ga, Cd, Si alloys, Sn alloys, or Al alloys; or composites including metallic compounds and carbonaceous materials. Low crystallinity carbons include soft carbon and hard carbon, and high crystallinity carbons include natural graphite, kish graphite, and pyrolytic carbon, mesophase pitch based carbon fiber, meso-carbon microbeads, mesophase pitches, and high temperature calcined carbons such as petroleum or coal tar pitch derived cokes. One of these materials alone or a mixture of two or more of these materials may be used, and metallic lithium thin films may also be used as the negative electrode active material.

The negative electrode conductive material is used to impart conductivity to the electrode, and can be used without any particular limitation as long as it is electrically conductive without causing chemical changes in the battery to be configured. Specific examples include graphite, such as natural or artificial graphite; carbon-based materials, such as carbon black, acetylene black, ketjen black, channel black, furnace black, lamp black, thermal black, carbon fiber, carbon nanotubes, etc.; metal powders or metal fibers, such as copper, nickel, aluminum, silver, etc; conductive whiskers, such as zinc oxide or potassium titanate; conductive metal oxides, such as titanium oxide; or conductive polymers, such as polyphenylene derivatives, any one of which alone or a mixture of two or more of the foregoing may be used. The negative electrode conductive material may be typically included in an amount of 1 to 30 wt%, more particularly from 1 to 20 wt%, more particularly from 1 to 10 wt%, based on the total weight of the negative electrode active material layer.

The negative electrode binder serves to improve the adhesion between the negative electrode active material particles and the adhesion of the negative electrode active material to the negative electrode current collector. Specific examples include polyvinylidene difluoride (PVDF), vinylidene difluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, and polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorinated rubber, or various copolymers thereof, any one of which alone or a mixture of two or more of the foregoing may be used. The negative electrode binder may be included in an amount of 1 to 30 wt%, more particularly from 1 to 20 wt%, more particularly from 1 to 10 wt%, based on the total weight of the negative electrode active material layer.

The negative electrode current collector is not particularly limited as long as it has a high conductivity without causing chemical changes in the battery, and for example, copper, stainless steel, aluminum, nickel, titanium, calcined carbon, or copper or stainless steel that is surface-treated with carbon, nickel, titanium, silver, etc., an aluminum-cadmium alloy, and the like may be used.

In addition, the negative electrode current collector may have a thickness of typically 3 µm to 500 µm, and like the positive electrode current collector, microscopic irregularities may be formed on the surface of the negative electrode current collector to strengthen the coupling force of the negative electrode active material. For example, it can be used in various forms, such as films, sheets, foils, nets, porous bodies, foams, nonwoven bodies, etc.

Meanwhile, in the lithium secondary battery, the separator can be used without any particular limitation as long as it is conventionally used as a separator in a lithium secondary battery, and it is particularly desirable that it has a low resistance to ion migration of the electrolyte and has an excellent electrolyte wettability. Specifically, porous polymeric films, for example, porous polymeric films made of polyolefin-based polymers such as ethylene homopolymers, propylene homopolymers, ethylene/butene copolymers, ethylene/hexene copolymers, and ethylene/methacrylate copolymers, or laminated structures of two or more layers thereof, may be used. Also, conventional porous nonwoven fabrics may be used, for example, nonwoven fabrics made of high melting point glass fibers, polyethylene terephthalate fibers, and the like may be used. The separator may also be a porous thin film having a pore diameter of 0.01 µm to 10 µm and a thickness of 5 µm to 300 µm.

Meanwhile, in the lithium secondary battery, the electrolyte may include, but is not particularly limited to, organic solvents and lithium salts conventionally used in electrolytes.

The organic solvent may be used without limitation as long as it is capable of acting as a medium in which the ions involved in the electrochemical reactions of the battery can move. Specifically, the organic solvents include ester-based solvents such as methyl acetate, ethyl acetate, γ-butyrolactone, ε-caprolactone, and the like; ether-based solvents, such as dibutyl ether or tetrahydrofuran; ketone-based solvents, such as cyclohexanone; aromatic hydrocarbon solvents, such as benzene and fluorobenzene; carbonate-based solvents such as dimethylcarbonate (DMC), diethylcarbonate (DEC), methylethylcarbonate (MEC), ethylmethylcarbonate (EMC), ethylene carbonate (EC), propylene carbonate (PC), and the like.

Among them, carbonate-based solvents are preferred, and mixtures of annular carbonates (e.g., ethylene carbonate or propylene carbonate), which have high ionic conductivity and high dielectric constant that can improve the charge and discharge performance of the battery, and linear carbonate-based compounds (e.g., ethylmethylcarbonate, dimethylcarbonate, or diethylcarbonate) with low viscosity are more preferred.

The lithium salts may be used without limitation as long as they are compounds capable of providing lithium ions for use in a lithium secondary battery. Specifically, the lithium salts may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. Preferably, the lithium salts are included in the electrolyte at a concentration of about 0.6 mol% to 2 mol%.

In addition to the above electrolyte components, the electrolyte may also include, for example, pyridine, triethylphosphite, triethanolamine, cyclic ether, ethylenediamine, N-glyme, hexamethyl phosphoric triamide, nitrobenzene derivatives, sulfur, quinone imine dyes, N-substituted oxazolidinones, N,N-substituted imidazolidines, ethylene glycol dialkyl ether, ammonium salts, pyrroles, 2-methoxyethanol, or aluminum trichloride for the purpose of improving the life characteristics of the battery, inhibiting the reduction of the battery capacity, improving the discharge capacity of the battery, etc. Here, the additive may be included in an amount of 0.1 to 5 wt% based on the total weight of the electrolyte.

The lithium secondary battery of the present disclosure can be manufactured by disposing a separator between the positive electrode and the negative electrode to form an electrode assembly, the electrode assembly being placed in a cylindrical battery case or a prismatic battery case and then injected with an electrolyte. Alternatively, the lithium secondary battery may be produced by laminating the electrode assembly, impregnating it with an electrolyte, and sealing the resulting product in a battery case.

The battery case may be any conventionally used in the art, and is not limited in shape depending on the intended use of the battery, and may be, for example, cylindrical using a can, prismatic, pouch-type, or coin-type.

The lithium secondary battery according to the present disclosure exhibits excellent discharge capacity, output characteristics, and capacity retention rate stably, and is therefore useful in portable devices such as cell phones, laptop computers, digital cameras, energy storage systems (ESS), and electric vehicles such as hybrid electric vehicles (HEV).

The present disclosure will now be described in more detail by way of example. However, the following examples are intended to illustrate the disclosure and are not intended to limit the scope of the disclosure.

### Example 1

A current collector sheet was prepared in which a self-temperature control layer including a PTC material on an aluminum foil with a thickness of 20 µm was coated with a grid-like pattern as shown in FIGS. 1 and 2. The thickness of the self-temperature control layer was 10 µm, a width of one strip was 2 mm, the mutual spacing between the plurality of strips was 20 mm, and the area covered by the self-temperature control layer on the aluminum foil was 22%. A positive electrode slurry was applied to the current collector sheet, dried and rolled to complete the preparation of the positive electrode. The positive electrode slurry was prepared by mixing LiFePO₄ as a positive electrode active material, PVDF as a binder, and carbon black as a conductive material in a weight ratio of 96:2:2 in NMP solvent, and a thickness of the positive electrode active material layer on which the positive electrode slurry was dried was 100 µm.

### Example 2

The positive electrode was prepared by the same method as in Example 1, except that the coating pattern of the self-temperature control layer was striped as shown in FIG. 3. In this case, the area of the aluminum foil covered by the self-temperature control layer was 22%, and the thickness of the self-temperature control layer was 10 µm.

### Example 3

A current collector sheet was prepared in which a self-temperature control layer including a PTC material on an aluminum foil having a thickness of 20 µm was coated in a grid-like pattern, wherein the area of the aluminum foil covered by the self-temperature control layer was 50%. The positive electrode slurry of the same composition as in Example 1 was then applied, and the positive electrode was prepared by drying and rolling under the same conditions as in Example 1.

### Comparative example

A positive electrode was prepared by preparing a current collector in which a self-temperature control layer was not formed in Example 1, applying a positive electrode slurry of the same composition as in Example 1 on the current collector, and drying and rolling under the same conditions as in Example 1.

### Experimental Example 1: Evaluation of low temperature capacity

Artificial graphite was used as the negative electrode active material, carbon black as the conductive material, and styrene-butadiene rubber (SBR) and carboxymethylcellulose (CMC) as the binder. The negative electrode slurry was prepared by mixing and stirring the negative electrode active material, conductive material and binder in water in a weight ratio of 95.9:0.8:3.3. The negative electrode slurry was applied to copper foil with a thickness of 20 µm, dried and rolled to prepare the negative electrode.

An electrode assembly was fabricated by opposing each of the positive electrode and negative electrode prepared in Examples 1 to 3 and the Comparative Example, and interposing a separator made of 18 µm polypropylene between them. Each of the electrode assemblies prepared was inserted into a pouch-type battery case, and a secondary battery was prepared by injecting an electrolyte composition into the battery case and sealing the case. As the electrolyte composition, a solution in which lithium hexafluorophosphate (LiPF₆, 1.0 M) and vinylcarbonate (VC, 2 wt%) were mixed in a mixture of ethylene carbonate (EC): Dimethyl carbonate (DMC): Diethylcarbonate (DEC) = 1:1:1 (volume ratio) was used.

For each prepared secondary battery, at a temperature of -10°C, it was charged at a constant current of 0.33C until the voltage reached 4.2V, and then discharged at a constant current of 0.33C until the voltage reached 3.0V. Here, "C" is the unit of charge and discharge rate, which is the current (A) during charge and discharge divided by the rated capacity (Ah) of the secondary battery. For example, 1C is the charge/discharge rate that takes 1 hour to fully charge or discharge the secondary battery.

The discharge capacity upon discharge was measured and the results are shown in Table 1. The figures in Table 1 are expressed as a relative percentage, considering the capacity of the secondary battery including the positive electrode of Example 1 as 100%.

### Experimental Example 2: Evaluation of resistance

For each of the secondary batteries prepared in Example 1, the resistance was measured in the following manner at a temperature of -10°C. It was charged at a current of 0.05C from SOC 0% until it reached SOC 30%. Then, at SOC 30%, it was pulsed by applying current at 0.5C for 30 seconds. Here, SOC (State of charge) is the percentage of the charge capacity to the total capacity of the secondary battery, and "C" in 0.5C is the unit of charge/discharge rate as described in Example 1 above. The DCIR was calculated and the results are shown in Table 1.

At a temperature of 25°C, the resistance was measured using the same method as above, and the results are shown in Table 1.

**[Table 1]**

| | Low temperature discharge capacity (%, vs. Example 1) | DCIR (mΩ) | |
|---|---|---|---|
| | | Low temperature (-10°C) | Room temperature (25°C) |
| Example 1 | 100% | 9.6 | 2.01 |
| Example 2 | 90% | 11.2 | 1.97 |
| Example 3 | 120% | 8.1 | 2.19 |
| Comparative Example | 50% | 19.8 | 1.76 |

A secondary battery prepared using the positive electrode of the Comparative Example that does not include a self-temperature control layer according to the present disclosure has capacity and resistance characteristics at low temperatures that are inferior to those of the secondary battery prepared using the positive electrode of any of Examples 1 to 3.

It was found that the secondary battery manufactured using the positive electrode of Example 3 in which the self-temperature control layer covers 50% of the area of the positive electrode current collector had the best capacity and low temperature characteristics at low temperatures, but the worst resistance characteristics at room temperature. Therefore, it is desirable to adjust the application area of the self-temperature control layer to an appropriate level in the present disclosure.

As such, the positive electrode and secondary battery according to the present disclosure have been shown to be superior in terms of capacity expression at low temperatures without the need for a separate means of heating the battery, and the resistance characteristics at room temperature are not significantly degraded compared to conventional positive electrodes.

The present disclosure has been described in more detail above with reference to the drawings and examples. However, it is to be understood that the configurations shown in the drawings or examples described herein are only exemplary of the disclosure and do not represent all of the technical ideas of the disclosure, and that there may be various equivalents and modifications that may be substituted for them at the time of filing the present disclosure.

## Claims

1. A positive electrode for lithium secondary battery comprising:
a positive electrode current collector;
a self-temperature control layer disposed on one or both sides of the positive electrode current collector, but disposed to cover a portion of the positive electrode current collector; and
a positive electrode active material layer disposed on: an exposed positive electrode current collector region not covered by the self-temperature control layer; and the self-temperature control layer, wherein
the self-temperature control layer comprises a positive temperature coefficient (PTC) material.

2. The positive electrode for lithium secondary battery of claim 1, wherein
the positive electrode active material layer comprises lithium iron phosphate as a positive electrode active material.

3. The positive electrode for lithium secondary battery of claim 1, wherein
the PTC material has conductive material dispersed in a polymeric material.

4. The positive electrode for lithium secondary battery of claim 3, wherein
the conductive material is a conductive carbon-based material.

5. The positive electrode for lithium secondary battery of claim 3, wherein
the self-temperature control layer comprises:
1 to 60 wt% of polymeric material; and
1 to 60 wt% of conductive material.

6. The positive electrode for lithium secondary battery of claim 1, wherein
the self-temperature control layer has a pattern shape selected from a striped pattern with a plurality of strips spaced apart side by side, a grid-like pattern with a plurality of strips extending in a y-axis direction and a plurality of strips extending in an x-axis direction intersecting, and a radial pattern with one strip spreading out in a whirlwind pattern.

7. The positive electrode for lithium secondary battery of claim 6, wherein
the self-temperature control layer has the grid-like pattern.

8. The positive electrode for a lithium secondary battery of claim 6, wherein
a width of the strip is selected from the range of 0.5 to 10 mm.

9. The positive electrode for lithium secondary battery of claim 1, wherein
a thickness of the self-temperature control layer is selected from a range of 3 to 30% of a thickness of the positive electrode active material layer.

10. The positive electrode for lithium secondary battery of claim 1, wherein
a thickness of the positive electrode active material layer is selected in the range of 50 to 200 µm.

11. The positive electrode for lithium secondary battery of claim 1, wherein
an area A of the positive electrode current collector covered by the self-temperature control layer is less than or equal to 50% of a total area B of the positive electrode current collector.

12. The positive electrode for lithium secondary battery of claim 1, wherein
at least a portion of the sides of the self-temperature control layer is in contact with the positive electrode active material layer.

13. A manufacturing method of a positive electrode for lithium secondary battery comprising:
applying a PTC material composition on a positive electrode current collector;
applying a positive electrode slurry onto the positive electrode current collector to which the PTC material composition is applied; and
drying and rolling, wherein
applying the PTC material composition is **characterized in that** the PTC material composition is applied to cover a portion of the positive electrode current collector.

14. A lithium secondary battery comprising:
a positive electrode according to any one of claims 1 to 12;
a negative electrode;
a separator; and
an electrolyte.
